# EUROPEAN PATENT APPLICATION

(11) **EP 4 783 545 A1**
(43) Date of publication of application: **29.07.2026**
(21) Application number: 25192623.4
(22) Date of filing: 29.07.2025
(51) Int. Cl.: H04L 65/10

(54) **COMMUNICATION TERMINAL, UNIVERSAL INTEGRATED CIRCUIT CARD AND METHOD THEREFOR**

(30) Priority: 24.01.2025 IN 202541006228
(71) Applicant: NXP B.V., 5656 AG Eindhoven (NL)
(72) Inventor: TIWARI, Rohit, 5656AG Eindhoven (NL)
(74) Representative: Schwarzweller, Thomas

(57) **Abstract**

A method for handling a temporary proactive command failure between an universal integrated circuit card (UICC 320) and a communication terminal (310). The method comprising, at the UICC: receiving a communication from the terminal; sending, in response thereto, a proactive command to the terminal; receiving, in response to the proactive command, a notification of a temporary proactive command failure between the UICC and the terminal where the notification includes an expected duration to recover from the temporary proactive command failure; and implementing a strategy to handle the temporary proactive command failure in dependence on the notification, wherein the strategy comprises one of: waiting a period of time that exceeds the expected duration before re-sending the proactive command; waiting an agreed time between the UICC and the terminal before re-sending the proactive command; re-sending the proactive command in response to a subsequent event initiated by the terminal; terminating communications with the terminal.

## Description

### Technical Field

The technical field relates generally to a communication terminal (which is often implemented as a modem), an universal integrated circuit card (UICC) and method for recovering from a proactive command sent to the communication terminal that failed due to a temporary proactive command failure. The technical field is applicable to, but not limited to, an UICC that is provided with the flexibility to terminate, wait or retry for the proactive command based on inputs from a communication terminal.

### Background

An Universal Integrated Circuit Card (UICC) is a smart card used in communication terminals, for example used in GSM^{™} and LTE^{™} communication units to store, inter alia, subscriber data. Often, the UICC ensures the integrity and security of all kinds of personal data, and it typically holds a few hundred kilobytes of data. With the advent of more services, it is known that the storage space for UICCs will need to be larger. In an UICC context, the information sharing between communication terminal and UICC is performed using command and response pairs. Generally, communication terminals act as a master device, where the communication terminal will send a command to an UICC and the UICC will perform the required operation as required by the command and it will send back the response to the communication terminal indicating success, failure or any additional data as applicable for the respective command.

There are certain scenarios where the UICC also needs to send commands to the communication terminal for performing certain operations. Such commands are referred to as 'proactive commands'. Thus, unlike regular commands, which are sent from a communication terminal to UICC, it is known that the proactive commands may result in temporary or permanent failures, as defined by ETSI TS 102.223.

Some examples of temporary errors, as defined in v17.02 section 8.12 of ETSI TS 102.223 as '2X', indicate to the UICC that it may be worth re-trying a sending of the command at a later time, include: '20' = Terminal currently unable to process command; '21' = Network currently unable to process command; '22' = User did not accept the proactive command; '23' = User cleared down call before connection or network release; '24' = Action in contradiction with the current timer state; '25' = Interaction with call control by NAA, temporary problem; '26' = Launch browser generic error; '27' = MMS temporary problem; '28' = Reserved for 3GPP (for future usage); and '29' = Reserved for 3GPP (for future usage).

For example, ETSI TS 102.241 defines a situation where a specific proactive command (i.e., 'display text') fails because of a 'screen busy' conflict; here an event can be setup by the UICC to the communication terminal using, say, a 'setup event list' proactive command. In the context herein described, an event is intended to encompass a command that is generated by the communication terminal and sent to a UICC when a required condition is met, which was requested by the UICC in 'set up event list'. Later when the screen is free, the communication terminal will trigger the UICC with an Event_Event_Download_ldle_Screen_Available message and the UICC (or applet installed on it) can then send the proactive command (i.e., 'display text') again. The communication terminal then removes the idle screen available event from its current event list. This is in order for the communication terminal to report this event only once, i.e., after the event has been requested by the UICC. A comprehensive list of proactive commands is identified in ETSI TS 102.223 v17.02 section 6.1., such as: 'Send Data', 'Timer Management', 'Receive Data', 'Display text', etc.

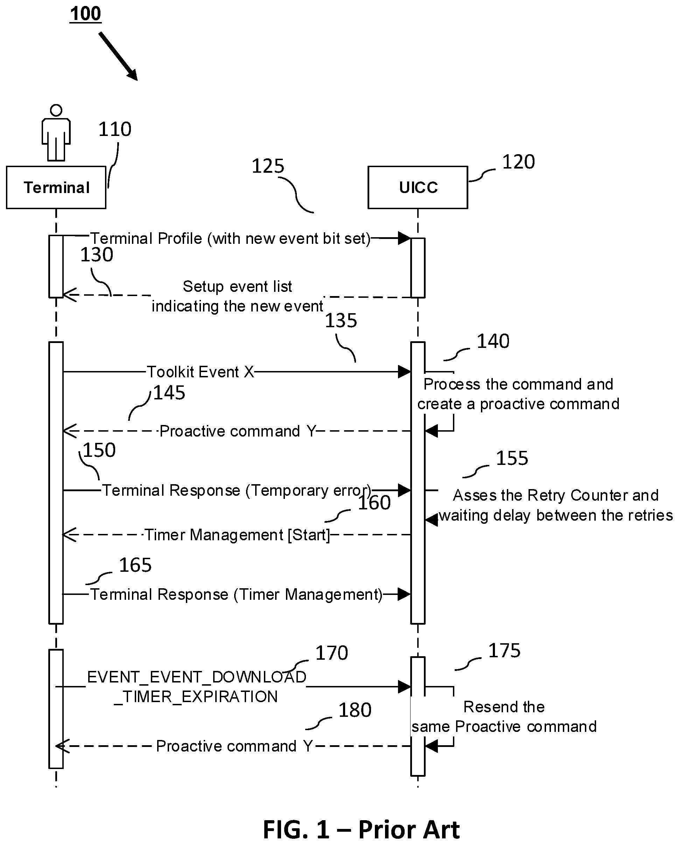

Referring now to FIG. 1, a simplified known message sequence chart 100 of existing behaviour between a communication terminal 110 and a UICC 120, following an event for failed proactive commands, is illustrated. At 125, the communication terminal 110 sends a communication terminal profile with a new event bit set to the UICC 120. In response, at 130, the UICC 120 sends the communication terminal 110 a setup event list that indicates the new event. At 135, the communication terminal 110 sends a toolkit event X command to the UICC 120, and at 140 the UICC 120 processes the command and creates a proactive command 'Y', which it sends to the communication terminal 110 at 145. At 150, the communication terminal 110 sends a terminal response (indicating a temporary error) command to the UICC 120, and at 155 the UICC 120 assesses the retry counter and commences a waiting delay between one or more retires for sending the proactive command 'Y'. At 160, the UICC 120 informs the communication terminal 110 that timer management has started, which the communication terminal 110 acknowledges at 165 with a communication terminal response message. At 170, the communication terminal 110 sends an Event_Event_download_timer_expiration command to the UICC 120. In response, at 175, the UICC 120 processes the command and sends the proactive command 'Y' to the communication terminal 110 at 180. There are multiple disadvantages of this approach, such as unnecessary battery consumption (wasted due to repetitive and failed retry attempts), uncertainty for the UICC as to when the respective proactive command can be successful, a critical resource (timer) needs to be used (which is a limited resource on the communication terminal (limited to a total of '8' timers).

IN201921009668A describes a scenario where there is a resumption of the proactive command after an error has occurred. US10241845B2 describes a scenario where the event relates to a use case of proactive command failure recovery. Neither of these approaches provides a mechanism that can allow to drop, wait or resume the communication later with a likelihood of success.

Accordingly, there is a need for an improved mechanism for a communication terminal, an universal integrated circuit card (UICC) and a method for recovering from a temporary proactive command failure between the communication terminal and the UICC following a proactive command sent from the UICC to the communication terminal that can provide an opportunity to the UICC to either abort, wait for success or retry later.

### Summary

Examples described herein provide a communication terminal, an universal integrated circuit card (UICC) and method for recovering from a temporary proactive command failure following a proactive command sent from the UICC to the communication terminal, as described in the accompanying claims. Specific embodiments are set forth in the dependent claims. These and other aspects will be apparent from and elucidated with reference to the embodiments described hereinafter.

### Brief description of the drawings

Further details, aspects and embodiments will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified known message sequence chart of existing behaviour following an event for failed proactive commands.
FIG. 2 illustrates a block diagram of a wireless communication unit, adapted in accordance with some example embodiments.
FIG. 3 illustrates one example of a message sequence chart for when a UICC decides to wait a period of time before re-sending a proactive command after a temporary proactive command failure, according to example embodiments.
FIG. 4 illustrates one example of a message sequence chart when the UICC decides not to wait a requested/suggested time before sending the proactive command, according to example embodiments.
FIG. 5 illustrates one example of a message sequence chart for when an UICC decides not to wait a requested/suggested time and abort the proactive session without any retry attempt, according to example embodiments.
FIG. 6 illustrates one example of a flowchart of a boot-up sequence, for example for a communication terminal profile and setting up an event list, according to example embodiments.
FIG. 7 illustrates one example of a flowchart a proactive command, failed because of a temporary error, where the communication terminal will send to the UICC a command temporary error notification, according to example embodiments.
FIG. 8 illustrates a further example of a flowchart for a proactive command, failed because of a temporary error, where the communication terminal will send to the UICC a command temporary error notification, according to example embodiments.
FIG. 9 illustrates one example of a flowchart using retry or abort or retry of the command using an event, according to example embodiments.
FIG. 10 illustrates one example of a flowchart of a decision framework, according to example embodiments.
FIG. 11 illustrates one example of a use case for the UICC communicating with a communication terminal and peripherals/remotely attached servers, etc., according to example embodiments.

### Detailed description

The inventor has recognized and appreciated that for temporary errors, an opportunity exists for a better-managed retry attempt of the proactive command, e.g., it is worth re-trying after waiting for a certain amount of time. In order to address the technical problem of an UICC that sends (and repeatedly sends) a proactive command to the communication terminal when a temporary proactive command failure exists between the communication terminal and the UICC, examples herein described describe a scenario whereby the communication terminal notifies the UICC with a delayed period of time before a retry attempt at re-sending the proactive command, which may encompass an expected duration to recovery from the temporary proactive command failure. At this point, the UICC can wait, terminate or retry the proactive command at (or after) a notified time.

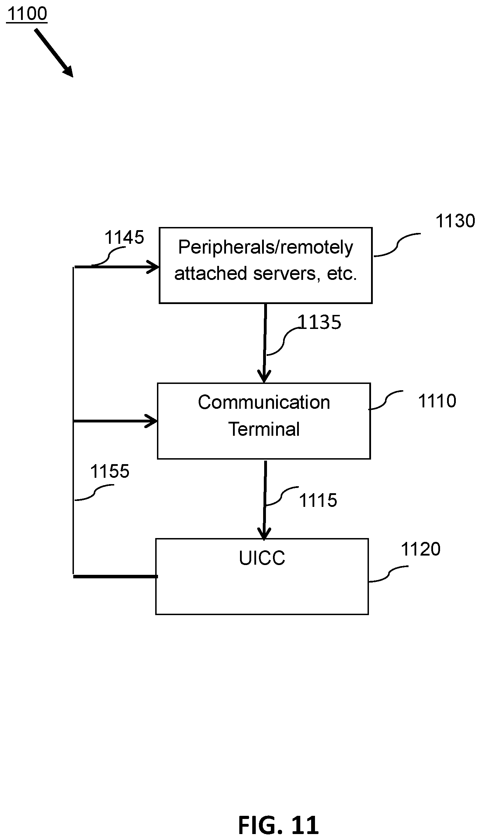

Hereafter, it is envisaged that the expression 'proactive command failure' encompasses one or more of the following:
(i) a temporary communication failure as defined in v17.02 section 8.12 of ETSI TS 102.223. There are following categories (with error codes defined in 102.223). Here it is noted that the errors (with error codes (20, 24, 25, 26, 27)) are known to the communication terminal; and the error with error code (21) is known to the communication terminal and the communication terminal is then able to approximate the recovery time; and errors (with error codes 22, 23) fall outside of the communication terminal's control. Thus, examples herein described may be employed where the communication terminal is able to know or predict the recovery time, for example based on current error codes: 20, 21, 24, 25, 26, 27;
(ii) a failure that happens within the 'communication terminal', e.g., error codes '20' = terminal currently unable to process command; '24' = Action in contradiction with the current timer state; '26' = Launch browser generic error code, for example that the communication terminal is operating in an environment that is not relevant to run the command, such as requesting to run a timer which is already running, or requesting a HTTP session when there is no network connectivity;
(iii) a failure in a communication link between the communication terminal and one or more other peripherals (or remote devices), as illustrated in FIG. 11;
(iv) an identified error in one or more proactive command parameters, for example while setting up an hyper-text transfer protocol (HTTP) session with certain parameters that are not relevant to the current device/server setup;
(v) an user declining the requested command, for example if the communication terminal user stops the call set-up attempt or the redial mechanism before a result is received from a network; and
(vi) that the communication terminal is too 'busy' to process the proactive command.

It is noted that, in some instances, the location at which the 'proactive command failure' occurred may depend on a type of proactive command used. It is noted that the expression 'proactive command failure' does not encompass a failure in the communication link between the UICC and the communication terminal, as this will prevent the successful issuance and reception of a 'temporary error notification' as described herein.

In dependence on the notification sent from the communication terminal, the UICC may decide to retry sending the proactive command. If the UICC decides that it is to retry sending the proactive command, the notification sent from the communication terminal that there is a temporary proactive command failure may indicate to the UICC that a subsequent event would indicate that the temporary proactive command failure has been resolved. In response to this notification, the UICC may retry sending the proactive command. In some examples, the subsequent event may be a message or command sent from the communication terminal. Thus, the UICC is able to determine, in response to the subsequent event received from the communication terminal, that the communication terminal has recovered from the temporary proactive command failure; and retry sending the proactive command in response to the received subsequent event as the UICC knows a current status of the communication terminal. In this manner, if the subsequent event is initiated immediately after the communication failure has been resolved, the UICC may be allowed to know the precise timing, following the reception of the subsequent event when a proactive command can be re-sent, without attempting further retries that may fail. In this manner according to the examples described herein, the UICC now has the flexibility to terminate, wait or retry for the proactive command based on the inputs from communication terminal. In this manner, it is no longer the case that an UICC can never know when the communication terminal is able to successfully process its proactive command request, after a temporary proactive command failure. Additionally, in this manner, the UICC is able to now control how the retry should happen, with the overall procedure being more flexible and controllable. Furthermore, in this manner, resources will not be unnecessarily consumed or wasted, e.g., battery power due to repetitive and failed retry attempts.

In some examples, it is envisaged that the UICC may receive multiple instances of the same command (that is a temporary error notification) following waiting the notified amount of time.

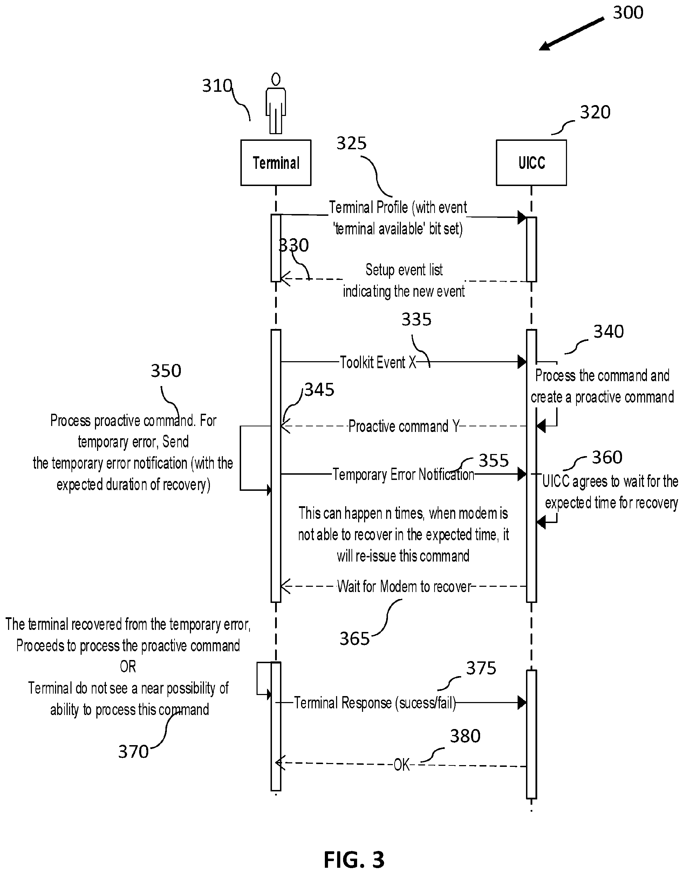

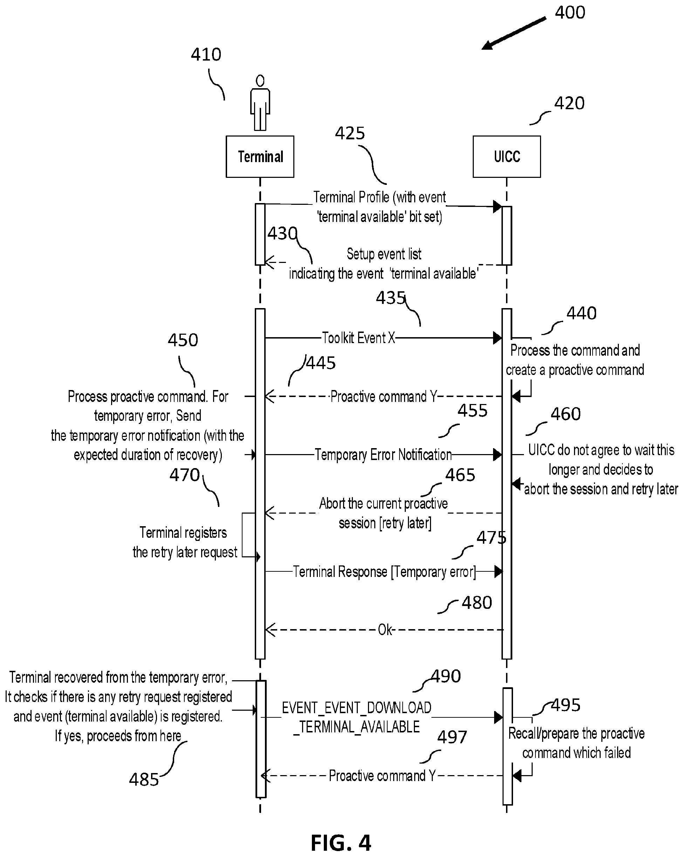

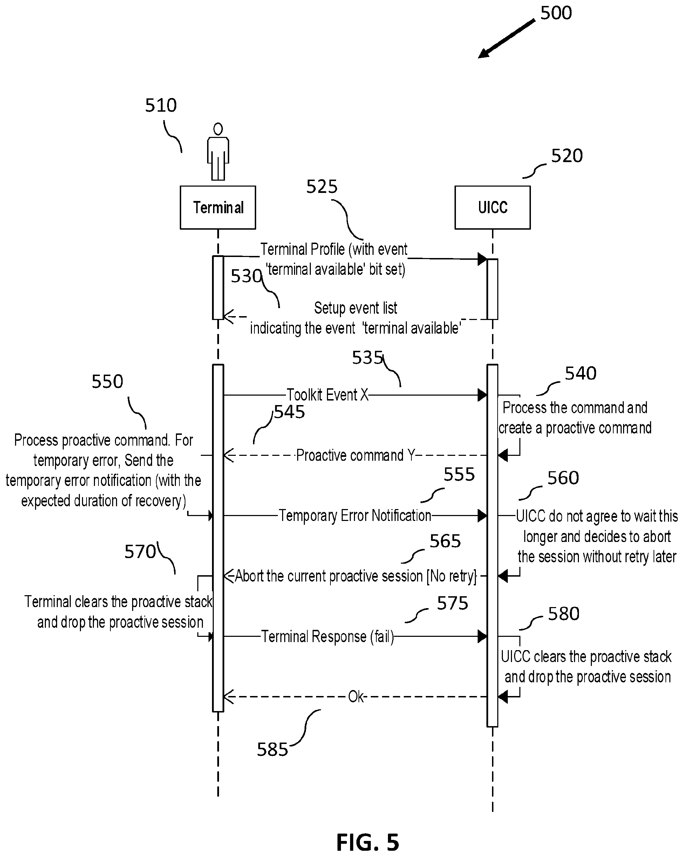

It is acknowledged that, prior to employing concepts described herein, a retry is based on a counter value and a timer value (that sets a waiting delay), where each of the counter and timer values may be configurable. The factors of the configuration may be manufacturer dependent as to how they see the overall environment where the UICC is going to be deployed. However, after employing some of the concepts described herein, three new approaches (including two modes of recovery) are supported:
1. The UICC may decide (or in some instances apriori agree with a communication terminal) to wait for a longer time for the communication terminal (e.g., modem) to recover from a temporary proactive command failure: In some examples, the duration to recovery may be received in the proposed (new) command, e.g., in a 'temporary error notification'. In this case, the communication terminal (e.g., modem) is expected to send a successful communication terminal response (for example a command that notifies the UICC of an ability to now receive the proactive command) after an expected communication recovery time has elapsed (as described with reference to FIG. 3).
2. The UICC may decide not to wait and may decide to retry later at a time decided by the UICC or in response to an event provided in a notification by the communication terminal of a temporary proactive command failure: In this case, the communication terminal (e.g., modem) may send out a failure Terminal response (TR) and may subsequently send a command or message that indicates that this failed proactive command can be re-sent (as described with reference to FIG. 4).
3. The UICC may ask to abort the session, where the decision to abort the session depends on the duration to recovery shared in the temporary error notification by the communication terminal: In this case the UICC may not want to wait or retry, where it is envisaged that the communication terminal (e.g., modem) may simply send the failed TR and delete all the cached data (as described with reference to FIG. 5).

For situations (1) and (2), it is envisaged that the waiting time may be provided by the communication terminal (e.g., modem) in a dedicated command (e.g., a temporary error notification). It is then up to the UICC to decide whether (or not) to accept the instruction/request in the dedicated command.

In a situation where the UICC accepts this duration (situation (1)), and if even after the duration to recovery has elapsed, the communication may still have failed to recover, it is envisaged that the communication terminal (e.g., modem) may resend the same command (e.g., temporary error notification) again with a new expected duration to recovery. In some examples, it is envisaged that this re-sent command (e.g., a resend of the temporary error notification) may keep on happening until the situation falls under situation (2) or (3) above. In some examples, it is envisaged that the number of times that this resend operation can happen may be configurable by the manufacturer, for example dependent upon the environmental conditions where the UICC may operate. In some examples, it is envisaged that this approach may save the UICC going into a race condition in case (1). It is noted that, for situations (2) and (3), there is no concept of a counter (or number of retries) employed in the examples described herein, because the UICC will reject the delay request on first notification by communication terminal (e.g., modem).

In some examples, the information expected from the communication terminal may include one or more of the following: (i) an expected duration to recover from the temporary proactive command failure to a state where the communication terminal can process the proactive command that failed with such a temporary error; (ii) an event, whenever the communication terminal recovers from the temporary situation which would have resulted in the proactive command failure. In some examples, the information expected at the UICC, received from the communication terminal, may include one or more of the following: (i) a command indicating the duration to recovery, for example where the UICC may be configured to be able to decide whether such a recovery duration is acceptable; (ii) a new envelope event to be sent from the communication terminal to the UICC when the communication terminal is in a state to serve the proactive command, where the UICC may re-send the same proactive command on reception of this event. In some examples, the temporary problems are expected to be short lived, and the communication terminal recovers from it after a certain period. One such envisioned temporary error/failure is where a communication terminal currently is unable to process a command (as defined in ETSI TS 102.223). In some examples, the event on the communication terminal as requested in a setup event list may remain set until the UICC explicitly sends a setup event list without 'the communication terminal available' byte. This means that the event will be persisted in the communication terminal.

In some examples, it is also envisaged that the information expected from the communication terminal is not limited to an expected duration to recover to a state where the communication terminal can process the proactive command that failed with temporary error. In some examples, it is envisaged that the information expected from the communication terminal may be information that leads to better synchronization between the UICC and the communication terminal, such as a terminal state (waiting/processing), a state of current UICC command, etc. Since proactive commands are exchanged between the UICC and the communication terminal (e.g., modem), the most specific use case is related between these devices. However, it is envisaged that the concepts described herein are applicable to any devices where a retry may not happen but where a handshake procedure is in place.

It is envisaged that, in some examples, the concepts herein described may be used for all types of proactive command, such as those identified in ETSI TS 102.241. It is envisaged that in some examples, the concepts herein described may be used for all types of temporary error/failure on the communication terminal. It is envisaged that in some examples, the concepts herein described may be applied for other cases where a retry from a host device such as UICC, to a server/device such as a communication terminal, is not event dependent but may be delay dependent.

The proactive commands are fully processed by the communication terminal. According to examples described herein, the communication terminal has been adapted and is now arranged to play a significant role in providing the UICC with the relevant information to enable the UICC to decide when it should retry sending a proactive command as a result of temporary errors identified at the communication terminal.

In some examples, an envelope command event triggers the UICC, when the communication terminal (e.g., modem) is recovered from the temporary error. A skilled person recognizes that 'envelope command event' and 'an event' are being used interchangeably herein, not least because the event reaches the UICC from a communication terminal (e.g., modem) in a form of an envelope command (i.e., it is a type of command among multiple commands supported by UICC). Any event is generated when a certain condition is met as requested by UICC. For example, when a timer is requested by the UICC of 10 seconds, after 10 seconds is elapsed a timer expiration event will be generated in the modem, and this event will be sent to the UICC using an envelope command. A skilled person recognizes that the event sent in a set-up event list may notify the communication terminal (e.g., modem) that the UICC supports this feature. Thus, the set-up event list is a proactive command sent by the UICC to the communication terminal (e.g., modem) that contains a list of events on which the UICC requires the communication terminal (e.g., modem) to notify it. In this example, the envelope event through which communication terminal will notify the UICC and the UICC mechanism will perform a retry of proactive commands following a reception of the envelope. The UICC retries the proactive command on the event. Thus, the UICC does not retry the proactive command without knowing the status of communication terminal.

In a first aspect, examples herein described provide a method for handling a temporary proactive command failure between an universal integrated circuit card, UICC, and a communication terminal, the method comprising, at the UICC: receiving a communication from the communication terminal; sending, in response thereto, a proactive command to the communication terminal; receiving, in response to the proactive command, a notification of a temporary proactive command failure between the UICC and the communication terminal where the notification includes an expected duration to recover from the temporary proactive command failure; and implementing a strategy to handle the temporary proactive command failure in dependence on the notification, wherein the strategy comprises one of: waiting a period of time that exceeds the expected duration before re-sending the proactive command; waiting an apriori period of time agreed between the UICC and the communication terminal before re-sending the proactive command; re-sending the proactive command in response to a subsequent event initiated by the communication terminal and informed to the UICC in the notification; terminating communications between the UICC and the communication terminal.

In a second aspect, examples herein describe an universal integrated circuit card, UICC, for handling a temporary proactive command failure between the UICC and a communication terminal, the UICC comprising: a receiver arranged to receive a communication from the communication terminal; a transmitter arranged to send, in response thereto, a proactive command to the communication terminal; a processor operably coupled to the receiver and transmitter; wherein the receiver is arranged to receive, in response to the proactive command, a notification of a temporary proactive command failure between the UICC and the communication terminal, wherein the processor is arranged to: determine that the notification comprises an expected duration to recover from the temporary proactive command failure; and implement a strategy to handle the temporary proactive command failure in dependence on the notification. The strategy comprises one of: wait a period of time that exceeds the expected duration before re-sending the proactive command; wait an apriori period of time agreed between the UICC and the communication terminal before re-sending the proactive command; re-send the proactive command in response to a subsequent event initiated by the communication terminal and informed to the UICC in the notification; terminate the communication between the UICC and the communication terminal.

In a third aspect, examples herein described provide a communication terminal for handling a temporary proactive command failure between the communication terminal and an universal integrated circuit card, UICC, the communication terminal comprising: a transmitter arranged to send a communication to the UICC; a receiver arranged to receive, in response thereto, a proactive command from the UICC; a processor operably coupled to the receiver and transmitter and arranged to process the proactive command, determine that a temporary proactive command failure exists between the UICC and the communication terminal and, in dependence thereon the transmitter sends a notification of the temporary proactive command failure, wherein the notification comprises an expected duration to recover from the temporary proactive command failure.

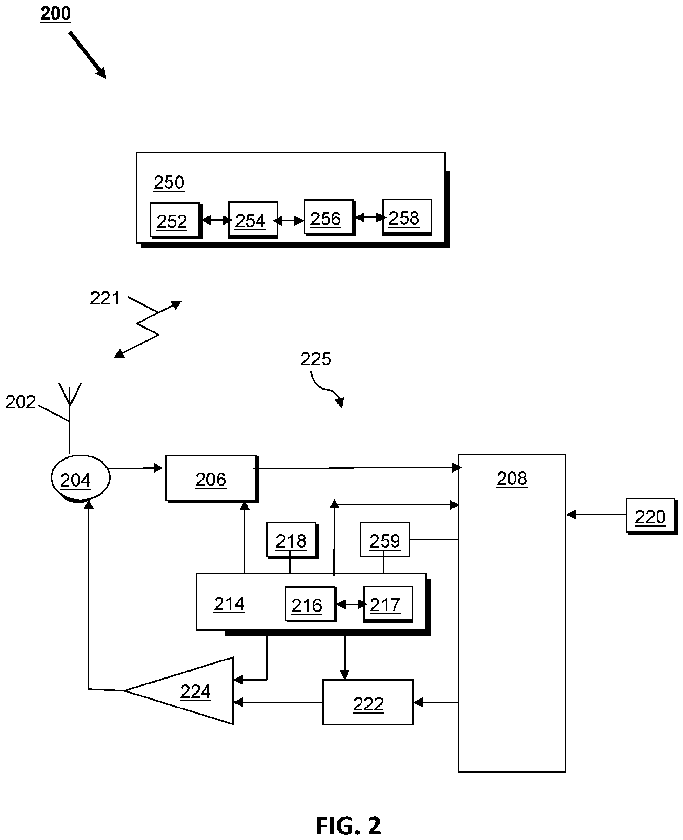

Referring to FIG. 2, a block diagram of a communication terminal 225 and a UICC 250, adapted in accordance with some example embodiments, is shown. In practice, purely for the purposes of explaining embodiments, the communication terminal 225 is described in terms of a wireless communication unit, such as a user equipment (UE) or wireless modem. The communication terminal 225 contains an antenna 202, for radiating transmit signals and for receiving transmissions 221 from another communication unit, such as a UICC in FIG. 2. The antenna 202 is coupled to an antenna switch or duplexer 204 that provides isolation between receive and transmit chains within the communication terminal 225. One or more receiver chains, as known in the art, include(s) receiver front-end circuitry 206 (effectively providing reception, filtering and intermediate or base-band frequency conversion). The receiver front-end circuitry 206 is coupled to a signal processor 208 (generally realized by a digital signal processor (DSP)). A skilled artisan will appreciate that the level of integration of receiver circuits or components may be, in some instances, implementation-dependent.

The controller 214 maintains overall operational control of the communication terminal 225. The controller 214 is also coupled to the receiver front-end circuitry 206 and the signal processor 208. In some examples, the controller 214 is also coupled to a buffer module 217 and a memory device 216 that selectively stores operating regimes, such as decoding/encoding functions, synchronization patterns, code sequences, and the like. A timer 218 is operably coupled to the controller 214 to control the timing of operations (e.g., transmission or reception of time-dependent signals) within the communication terminal 225. In this example, the controller 214 and/or signal processor 208 is/are also coupled to a circuit 259 for communicating with UICC.

As regards the transmit chain, this essentially includes an input interface 220, coupled in series through transmitter/modulation circuitry 222 and a power amplifier 224 to the antenna 202, antenna array, or plurality of antennas. The transmitter/ modulation circuitry 222 and the power amplifier 224 are operationally responsive to the controller 214.

The signal processor 208 in the transmit chain may be implemented as distinct from the signal processor in the receive chain. Alternatively, a single processor may be used to implement a processing of both transmit and receive signals, as shown in FIG. 2. Clearly, the various components within the communication terminal 225 can be realized in discrete or integrated component form, with an ultimate structure therefore being an application-specific or design selection.

FIG. 2 also includes a UICC 250 that is communicating with the communication terminal 225. A skilled person recognises that the UICC 250 has functionality that is similar to a microcontroller. As such, the UICC 250 includes (but is not limited to) the following interconnected circuits/functions: a processor (such as a central processing unit (CPU)) 252 arranged to at least run an applet that is stored on memory 254. The memory 254 may include one or more of read only memory (ROM), random access memory (RAM), nonvolatile memory (NVM). Input-output (I/O) ports (256) provide an interface to/from the UICC 250. A clock 258 is used by the processor 252 to organise and control the timing of actions performed by the UICC 250.

It is known that re-sending of the proactive command represents the current approach, wherein a timer and a counter are employed to perform a retry attempts of the proactive command after certain amount of time (decided by timer) for a number of times (determined by counter). However, in the examples described herein, a different approach is adopted whereby, in response to the proactive command, the processor processes the received notification of a temporary proactive command failure between the UICC and the communication terminal. The processor is arranged to: determine that the notification comprises an expected duration to recover from the temporary proactive command failure; and implement a strategy to handle the temporary proactive command failure in dependence on the notification. The strategy comprises one of: wait a period of time that exceeds the expected duration before re-sending the proactive command; wait an apriori period of time agreed between the UICC and the communication terminal before re-sending the proactive command; re-send the proactive command in response to a subsequent event initiated by the communication terminal and informed to the UICC in the notification; terminate the communication between the UICC and the communication terminal.

In some examples, the subsequent event may be a dedicated event that is notably not time-bound and where the communication terminal (e.g., modem) is the entity that decides when the UICC should re-send the proactive command, following the communication terminal recovering from the current issue(s)/ temporary proactive command failure(s).

Referring now to FIG. 3, one example of a message sequence chart 300 of communications between a communication terminal 310 and a UICC 320, that illustrates when the UICC 320 decides, in this example, to wait a 'period of time' before re-sending the proactive command after a temporary proactive command failure, according to example embodiments. In examples described herein, the amount of time, referred to hereinafter as the 'period of time', that the UICC 320 is to wait is provided in, say, a temporary error notification. In this context, the 'period of time' is determined as being sufficient for the communication terminal 310 to have recovered from the temporary proactive command failure. In examples described herein, the UICC 320 does not re-send the proactive command until the 'period of time' has expired, i.e., an expected duration to recover from the temporary proactive command failure. When the UICC 320 accepts the 'period of time' for recovery or requests for retry later in the response of temporary error notification and once the 'period of time' has expired, the communication terminal 310 has two options: (i) send the successful communication terminal 310 response (if it was able to perform the command successfully in this duration); or (ii) re-send the temporary error notification if it was not able to recover, with a new duration and any other information as per a determined relevance. Thus, in the examples described herein, any reference to the 'period of time' is intended to encompass the aforementioned imparted delay before re-sending the proactive command.

At 325, the communication terminal 310 sends a communication terminal profile with a new event, referred to as a 'terminal available' bit set, to the UICC 320. In response, at 330, the UICC 320 sends the communication terminal 310 a setup event list that indicates the new event. At 335, the communication terminal 310 sends a toolkit event 'X' command to the UICC 320, and at 340 the UICC 320 processes the command and creates a proactive command 'Y', which it sends to the communication terminal 310 at 345. Here, a skilled person will recognise that 'X' and 'Y' are normative references of a toolkit event and respective proactive command arising from a specific toolkit event. As an example, if toolkit event is EVENT_EVENT_DOWNLOAD_DATA_AVAILABLE (here 'X'), the respective proactive command can be RECEIVE DATA (here 'Y'). At 350, the communication terminal 310 processes the proactive command 'Y' and sends, at 355, a terminal response with a temporary error, notably with an expected duration of a recovery from the temporary error to the UICC 320. It is envisaged that there may be multiple reasons why the communication terminal could enter into a temporary error state. For example, the error codes may be one or more as defined in ETS TS 102.223 v17.02 section 8.12. It is envisaged that in some examples that the duration to recovery may be determined by the communication terminal based on the situation that it finds itself in. At 360, in response thereto, the UICC 320 decides to wait for a period of time that exceeds the expected time for recovery of the communication terminal 310, indicated at 365. In some examples, it is envisaged that this decision to wait a (suggested) period of time may happen 'n' times, if the communication terminal 310 is unable to recover at the expected time following the notified duration, i.e., following at least one (and up to say 'n-1' times) re-issue of the proactive command at 355.

In this example, at 370, either the communication terminal 310 recovers from the temporary error and proceeds to process the proactive command 'Y'; or the communication terminal 310 recognises and appreciates that it is not able to perceive a possibility that it can successfully receive the proactive command 'Y'. The communication terminal 310 then issues a terminal response (e.g., success or failure) at 375 to the UICC 320 and receives an acknowledgement at 380 from the UICC 320.

Referring now to FIG. 4, one example of a message sequence chart 400 between a communication terminal 410 and a UICC 420 is illustrated, when, in this example, the UICC 420 decides not to wait a requested/suggested time before sending the proactive command, according to example embodiments. At 425, the communication terminal 410 sends a communication terminal profile with a new event 'terminal available' bit set to the UICC 420. In response, at 430, the UICC 420 sends the communication terminal 410 a setup event list that indicates the event 'terminal available'. At 435, the communication terminal 410 sends a toolkit event 'X' command to the UICC 420, and at 440 the UICC 420 processes the command and creates a proactive command 'Y', which it sends to the communication terminal 410 at 445. At 450, the communication terminal 410 processes the proactive command 'Y' and sends, at 455, a terminal response with a temporary proactive command failure/error notification, notably with an expected duration of a recovery from the temporary error to the UICC 420 (as described previously). At 460, in response thereto, the UICC 420 decides to abort the session and perhaps retry later, say at an undetermined time. This UICC decision is sent to the communication terminal 410 at 465. In this example, the communication terminal 410 then registers the retry late request. At 475, the communication terminal 410 issues a terminal response following a determination of the temporary proactive command failure/error notification to the UICC 420 and the UICC 420 issues an acknowledgement to the communication terminal 410 at 480. In this example, at 485, the communication terminal 410 recovers from the temporary proactive command failure/error notification, checks whether any retry request is registered and an event 'terminal available' is registered. If 485 happens, at 490 the communication terminal 410 sends an Event_ Event_download_'terminal available' command to the UICC 420. At 495, the UICC recalls or re-prepares the proactive command 'Y' that failed. At 497, the UICC 420 then issues the proactive command 'Y' to the communication terminal 410.

Referring now to FIG. 5, one example of a message sequence chart 500 between a communication terminal 510 and a UICC 520 is illustrated, when the UICC 520, in this example, decides not to wait a requested/suggested time and abort the proactive session without any retry attempt, according to some example embodiments. At 525, the communication terminal 510 sends a communication terminal profile with a new event 'terminal available' bit set to the UICC 520. Thus, in this manner and in examples described herein, the communication terminal 510 informs the UICC 520 of each of the features that it supports using a terminal profile command. The individual features supported by the communication terminal 510 is coded in individual bits. When the UICC 520 receives the terminal profile command, it caches its data (e.g., in memory 254 in UICC 250 in FIG. 2), and when needed, checks the required bit and performs the relevant operation. Since there is a new feature being requested herein by the communication terminal 510, a new bit addition is needed. In response, at 530, the UICC 520 sends the communication terminal 510 a setup event list that indicates the event 'terminal available'. At 535, the communication terminal 510 sends a toolkit event 'X' command to the UICC 520, and at 540 the UICC 520 processes the command and creates a proactive command 'Y', which it sends to the communication terminal 510 at 545. At 550, the communication terminal 510 processes the proactive command 'Y' and sends, at 555, a terminal response with a temporary error notification, notably in this example with an expected duration of a recovery from the temporary error to the UICC 520. At 560, in response thereto, the UICC 520 decides to abort the session without any subsequent retry attempt. This UICC decision is sent to the communication terminal 510 at 565. The communication terminal 510 then clears the proactive stack and drop the proactive session at 570. At 575, the communication terminal 510 issues a 'failed' terminal response to the UICC 520. At 580, the UICC 520 then also clears the proactive stack that is held in the UICC and drops the proactive session and, at 585, the UICC 520 then acknowledges this to the communication terminal 510.

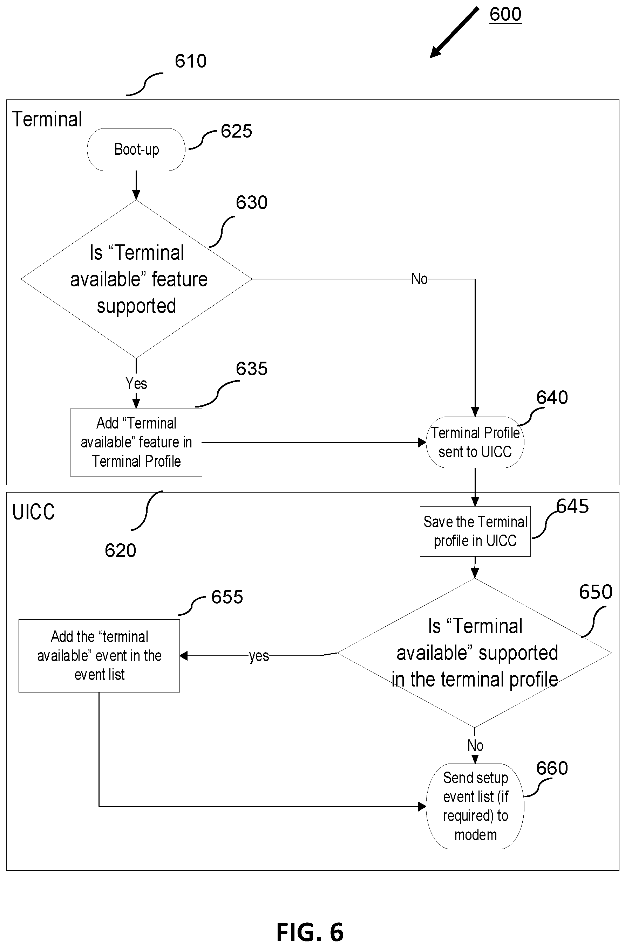

Referring now to FIG. 6, one example of a flowchart 600 of a boot-up sequence, for example for a terminal profile and setting up an event list is illustrated, according to some example embodiments. In this example, a communication terminal profile is provided with a dedicated bit to indicate a support of a new event referred to herein as "terminal available". When the UICC receives a communication terminal profile indicating the support of the "terminal available" feature, the UICC adds a dedicated event in the set-up event list proactive command to indicate the "terminal available" feature is supported by UICC as well.

The boot-up sequence starts in the communication terminal 610 at 625. At 630, a determination is made as to whether the 'terminal available' feature is supported. If the 'terminal available' feature is supported at 630, then the 'terminal available' feature is added to the communication terminal profile to enable the terminal to send a single bit to indicate the event and for the UICC 620 to know that the communication terminal 610 supports the temporary proactive command failure feature. The flowchart then transitions to 640. If the 'terminal available' feature is not supported at 630, then the flowchart transitions to 640, where the communication terminal profile is sent to the UICC 620. The flowchart 600 then transitions from the communication terminal 610 to the UICC 620, and at 645 the UICC 620 saves the communication terminal profile. At 650, at the UICC 620, a determination is made as to whether the 'terminal available' feature is supported in the communication terminal profile. If the 'terminal available' feature is supported at 650, then the 'terminal available' feature is added in the event list at 655. In essence, this functions more like a handshake between the UICC 620 and the communication terminal 610. Where the communication terminal 610 sends to UICC 620 it's terminal profile (indicating the supported features) and the UICC 620 sends to the communication terminal 610 a setup event list command indicating all the events on which it requires the communication terminal 610 to trigger it. The flowchart then transitions to 660. If the 'terminal available' feature is not supported at 650, then the flowchart then transitions to 660, where the setup event list is sent to the communication terminal 610.

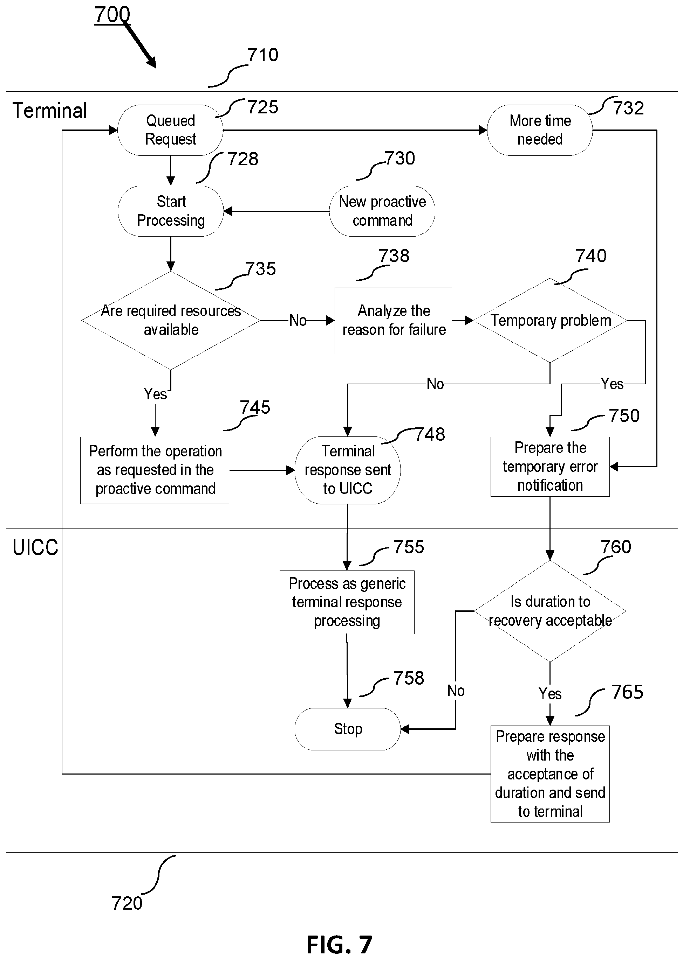

Referring now to FIG. 7, one example of a flowchart 700 of a notification of a new proactive command 730 that failed because of a temporary error is illustrated, where the communication terminal 710 will send to the UICC 720 a command temporary error notification, according to example embodiments. Processing starts in the communication terminal 710 at 728 with inputs of the new proactive command 730 and/or a queued request at 725. A determination of whether required resources are available is made at 735. If required resources are available at 735, the operation is performed as requested in the proactive command at 745. A communication terminal response is then sent to the UICC 720 at 748. If required resources are not available at 735, a reason for the failure is analysed (and determined) at 738. If the determined reason at 738 is identified as a temporary problem at 740, then a temporary error notification is prepared by the communication terminal 710 at 750 and sent to the UICC 720. Temporary errors are defined in ETSI TS 102.223, with examples of temporary errors being: 'Screen busy', 'User busy on call', etc. However, if the determined reason at 738 is identified as not being a temporary problem at 740, then the flowchart 700 moves to 748. At the UICC 720, following the communication terminal response being sent at 748, the UICC processes as per a generic terminal response at 755 and the process stops at 758. At the UICC 720, following the temporary error notification being sent by the communication terminal 710 at 750, the UICC 720 makes a determination of whether (or not) the duration prior to recovery is of an acceptable timeframe at 760. If the determination is that the duration prior to recovery is not of an acceptable timeframe at 760, the process stops at 758. If the determination is that the duration prior to recovery is of an acceptable timeframe at 760, then the UICC 720 prepares a response with the acceptance of the notified duration and sends the response to the communication terminal 710 at 765, where the request is queued at 725. For the cases where the queued request 725 cannot be serviced, even after the time to recovery is elapsed and there is more time at 732 needed for the communication terminal 710 to recover, the communication terminal 710 can still send to UICC 720 a temporary error notification at 750.

It is envisaged that this flow can run multiple times until a number of, say, configurable counters (that limits the number of re-try attempts) is exhausted to prevent the flow going into a 'race' condition. Once that counter is exhausted, the communication terminal 710 shall drop the request and shall enter into a processing state at 728 and since enough resources are not found at 735, it will result in permanent failure at 738. Then the communication terminal 710 response will be sent to UICC 720 at 748 through 740, terminating the procedure in a worst-case scenario.

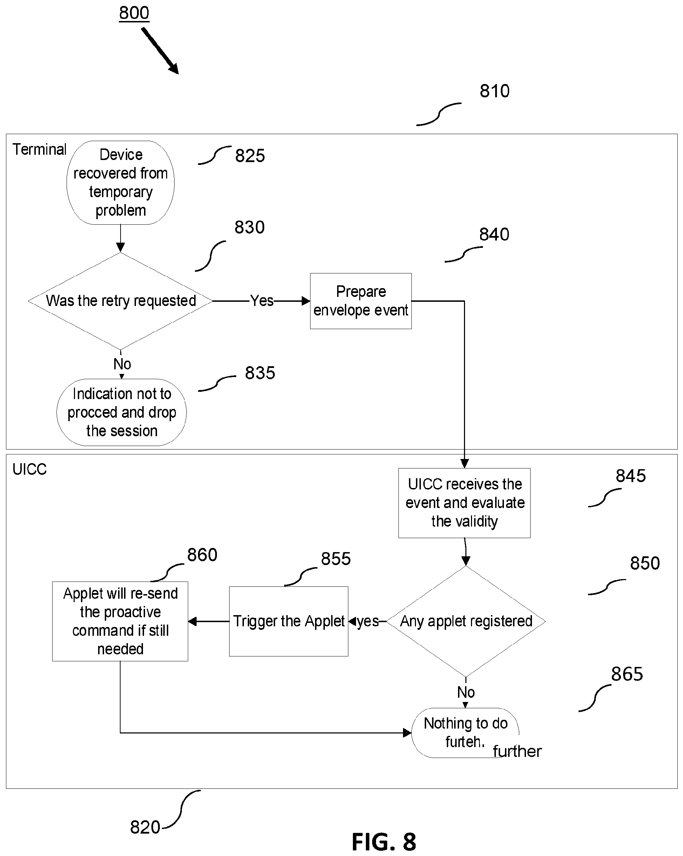

Referring now to FIG. 8, a further example of a flowchart 800 is illustrated for a proactive command that has failed because of a temporary error, where the communication terminal 810 will send a command temporary error notification to the UICC 820, according to some example embodiments. At 825, the communication terminal 810 has recovered from its temporary proactive command failure. At 830, a determination is made as to whether (or not) a retry is requested by the communication terminal 810. If the determination at 830 is that a retry was not requested by the communication terminal 810, the communication terminal 810 drops the proactive session and decides not to proceed at 835. If the determination at 830 is that a retry was requested by the communication terminal 810, an envelope event is prepared at 840 and then sent to the UICC 820, which receives the event and evaluates the validity of the event at 845. At the UICC 820, a determination is made as to whether any applet is registered at 850. If the determination made at 850 is that no applet is registered, then nothing further occurs at 865. However, if the determination made at 850 is that an applet is registered, then the applet is triggered at 855 and the applet will re-send the proactive command (if it is still needed) at 860. In examples herein described, the applets present in the UICC 820 may use proactive commands to perform various tasks that they are designed for. A number of the events discussed herein may be registered by the applets and when the event is sent to UICC 820, those events will be forwarded to the applet. Whenever applets receive this event, it is expected from it to retry their last sent proactive command if they still desire to obtain the respective service. Then nothing further occurs at 865.

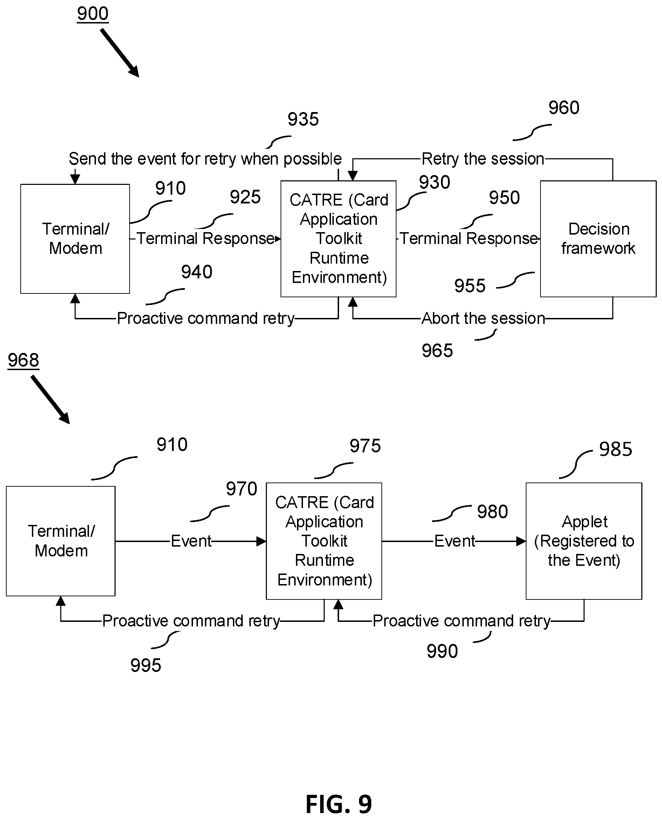

Referring now to FIG. 9, two example flowcharts 900, 968, of actions performed by a communication terminal 910 are illustrated, using retry or abort or retry of the command using an event, according to some example embodiments. A first example flowchart 900 starts with the communication terminal 910 sending a terminal response 925 to a card application toolkit runtime environment (CATRE) 930. A skilled person recognises that CATRE is a run time environment that manages the toolkit applets inside the UICC.

Toolkit applets are a specific form of java^{™} card applet designed to perform certain toolkit operations for the UICC. CATRE manages all these applets and their respective operations. In the context of the description herein, the term 'management' encompasses: events, state, operations, services, etc. The CATRE 930 responds to the communication terminal 910 with an 'event for retry when possible' command 935 or a proactive command retry 940. The first example flowchart 900 continues with the CATRE 930 sending a terminal response 950 to a decision framework 955. The decision framework 955 responds to the CATRE 930 sending a retry the session command 960 or abort the session command 965.

A second example flowchart 968 starts with the communication terminal 910 sending an event 970 to a card application toolkit runtime environment (CATRE) 975. The CATRE 975 responds to the communication terminal 910 with a proactive command retry 995. The second example flowchart 968 continues with the CATRE 975 sending an event 980 to an Applet (registered to the event) 985. The Applet 985 responds to the CATRE 975 sending a Proactive command retry command 990.

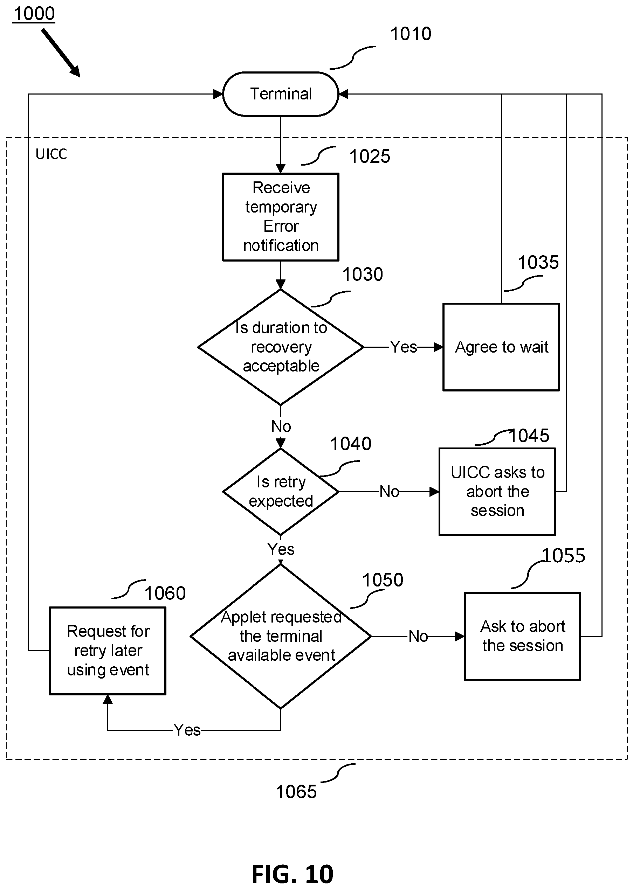

Referring now to FIG. 10, one example of a flowchart 1000 of a decision framework is illustrated, according to example embodiments. The flowchart 1000 starts at a communication terminal 1010 and UICC 1065, at 1025, the UICC 1065 receives a temporary error/failure notification. A determination is then made at 1030 as to whether a duration to recovery is acceptable to the UICC 1065. In some examples, this duration may depend on several factors as to how easily the communication terminal 1010 may be able to recover from the temporary error. In one example, it may be determined by the communication terminal 1010 that the duration needs to be evaluated by the communication terminal 1010 whenever an error occurs. In one example, a pre-programed value may be used if the duration to recovery cannot be determined.

If the duration to recovery is acceptable to the UICC 1065 at 1030, the UICC 1065 decides to wait at 1035. The relevant information is sent from UICC 1065 to the communication device 1010 (e.g., to 1025). If the duration to recovery is not acceptable to the UICC 1065 at 1030, the UICC 1065 makes a determination as to whether a retry is expected at 1040. If the retry is not expected at 1040, the UICC asks to abort the session, at 1045. The UICC 1065 asks the communication device 1010 (e.g., to 1025). If the retry is expected at 1040, the UICC 1065 determines whether (or not) an Applet requested the communication terminal available event at 1050. If the Applet requested the communication terminal available event at 1050, a request for retry later using the event is performed at 1060 and the relevant information is sent from UICC 1065 to the communication device 1010. If the Applet did not request the communication terminal available event at 1050, the UICC 1065 asks to abort the session, at 1055. The relevant information is sent from UICC 1065 to the communication device 1010 (e.g., to 1025).

It will be further appreciated that, for clarity purposes, the described embodiments with reference to different functional units and processors may be modified or re-configured with any suitable distribution of functionality between different functional units or processors being possible, without detracting from the concepts described herein. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

It is envisaged that examples described herein may be used to initiate a notification between the mobile communication terminal and a UICC after a temporary proactive command failure in the execution of a proactive command. Following an initiation of a notification that a proactive command failed because of a temporary proactive command failure (e.g., *"Terminal currently unable to process command"*) it is envisaged that the temporary proactive command failure may be handled efficiently and following an apriori agreement on the processing having been agreed by both the mobile communication terminal and the UICC. It is envisaged that examples described herein may be used in numerous applications, with a few envisaged use cases as follows.

Referring now to FIG. 11, one example 1100 is illustrated of a use case for the UICC 1120 receiving communications via path 1115 from a communication terminal 1110 and the communication terminal 1110 receiving communications via path 1135 from peripherals/remotely attached servers 1130, etc., according to some example embodiments. In examples herein described, it is noted that any communication failure happening in the communications path 1115 or the communication path 1155 from the UICC 1120 to the communication terminal 1110 cannot be addressed, not least as these communication paths are pivotal for the further communication between the communication terminal 1110 and UICC 1120.

In the example 1100, a use case for various temporary proactive command failures are illustrated. For example, in some instances, it is envisaged that a failure may be identified within the communication terminal 1110 itself. For example, the communication terminal 1110 may be too busy performing some other function or task, for example of a higher priority. Another example may be that the user of the communication terminal 1110 did not allow the requested proactive command to be processed or received. A yet further example may be that one or more of the parameters of the proactive command may be processed and determined as not being as expected. A still yet further example may be that the communication terminal 1110 determines that its operational environment may not be relevant or available to run the requested proactive command. In the example 1100, a further use case for various temporary proactive command failures is illustrated that do not relate to the proactive command (and/or the ability or desire to process the proactive command). Such a temporary proactive command failure includes a communication link failure in path 1135 where the communication terminal 1110 receives communications from peripherals (embedded within or outside communication terminal)/ remotely attached servers 1130, or a communication link failure in path 1145 where the UICC 1120 sends communications to the peripherals/remotely attached servers 1130. Such a temporary proactive command failure also includes a scenario where a connected device (e.g., peripheral/remotely attached server 1130) did not respond to the communication terminal 1110 in an expected manner.

A skilled person recognizes that proactive commands are critical during UICC data update. In essence, in a first example, the activation of a UICC is like updating the relevant MNO data in the UICC so that it works in a specific way as desired by the MNO. This data update is normally performed remotely and there are two protocols defined for this type of data transmission i.e., SCP80 and SCP81. Thus, the basic building block of these protocols are proactive commands such as: for SCP81, 'OPEN CHANNEL', 'TIMER MANAGEMENT', 'SEND DATA', 'RECEIVE DATA', 'CLOSE CHANNEL' and for SCP80, 'SEND SHORT MESSAGE'. It is noted that multiple other proactive commands may arise during this data update, which is dependent on the applet (if any) that is targeted during the data update.

In a second example, for refresh of the UICC contents on the communication terminal side, this mostly uses a REFRESH proactive command. It is normally used by the applet whenever any data is changed on the UICC, which is needed to be informed to the communication terminal. Once a REFRESH is performed, the communication terminal has to re-read the data (which depends on the REFRESH mode as described in ETSI TS 102.223 v17.02 section 8.6). Whenever, this REFRESH fails, the communication terminal will not be able to re-read the data and hence still holding the outdated data may result in malfunctioning of the UICC.

Thus, examples described herein remove the scenario where the use of the proactive commands is fully controlled by the communication terminal. Instead, the communication terminal is arranged to play a major role in providing the UICC with the relevant information, e.g., notifying the UICC of a temporary proactive command failureand when the UICC can retry sending the proactive command. Thus, the UICC takes control of what to do following a temporary proactive command failure, e.g., waiting for the temporary proactive command failure to be rectified or attempting to complete the sending of the proactive command at a subsequent time in the future, for example based on the suggestion by the communication terminal as to when the UICC can retry sending the proactive command due to temporary communication errors at the communication terminal side or in the communication between the communication terminal and UICC as identified by the communication terminal or dropping the proactive session altogether.

In the foregoing specification, the examples have been described with reference to specific examples of potential implementations or applications. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one embodiment, the illustrated examples may be implemented as circuitry located on a single integrated circuit or within a same device.

In some examples, the various components within the communication terminal and/or UICC may be realized in discrete or integrated component form, with an ultimate structure therefore being an application-specific or design selection. As the illustrated embodiments may, for the most part, be implemented using electronic components and circuits known to those skilled in the art, details will not be explained in any greater extent than that considered necessary as illustrated below, for the understanding and appreciation of the underlying concepts described herein and in order not to obfuscate or distract from the teachings described. A skilled artisan will appreciate that the level of integration of processor and memory circuits within the communication terminal and/or UICC may be, in some instances, implementation-dependent.

Also, for example, the examples, or portions thereof, may implemented as software or code representations of physical circuitry or of logical representations convertible into physical circuitry, such as in a hardware description language of any appropriate type. Also, the examples described are not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method for handling a temporary proactive command failure between an universal integrated circuit card, UICC (320), and a communication terminal (310), the method comprising, at the UICC (320):
receiving a communication from the communication terminal (310);
sending, in response thereto, a proactive command to the communication terminal (310);
receiving, in response to the proactive command, a notification of a temporary proactive command failure between the universal integrated circuit card, UICC (320), and the communication terminal (310), where the notification comprises an expected duration to recover from the temporary proactive command failure; and
implementing a strategy to handle the temporary proactive command failure of the communication in dependence on the notification, wherein the strategy comprises one of:
waiting a period of time that exceeds the expected duration before re-sending the proactive command;
waiting an apriori period of time agreed between the UICC (320) and the communication terminal (310) before re-sending the proactive command;
re-sending the proactive command in response to a subsequent event initiated by the communication terminal (310) and informed to the UICC (320) in the notification;
terminating communication between the UICC (320) and the communication terminal (310).

2. The method of Claim 1 wherein the notification of the temporary proactive command failure comprises one or more of the following:
an expected duration for the communication terminal (310) to recover to a state where it is able to process the proactive command that failed with the temporary proactive command failure;
information identifying a subsequent event where the event indicates that the communication terminal (310) is in a state able to receive the proactive command;
a status of the communication terminal;
a state of a current UICC command being performed by the communication terminal (310).

3. The method of Claim 1 or Claim 2 further comprising re-sending the proactive command by the UICC in a limited number of attempts.

4. The method of Claim 3 wherein the limited number of attempts configurable.

5. The method of any preceding Claim further comprising the UICC deciding not to re-send the proactive command until the UICC (320) knows a status of the communication terminal (310).

6. The method of any preceding Claim further comprising:
determining by the UICC (320) that the expected duration to recover from the temporary proactive command failure in the notification is unacceptable to the UICC (320); and
deciding by the UICC (320) not to wait before sending the proactive command.

7. The method of any preceding Claim further comprising, at the communication terminal (510):
processing (550) the proactive command; and
sending (555) the notification to the UICC (520), wherein the notification comprises an expected duration of a recovery from the temporary proactive command failure;
and, at the UICC (520):
aborting a communication session in response thereto without any subsequent retry attempt when the UICC (520) does not agree to wait the expected duration of a recovery.

8. An universal integrated circuit card, UICC (320), for handling a temporary proactive command failurebetween the UICC (320) and a communication terminal (310), the UICC (320) comprising:
a receiver arranged to receive a communication from the communication terminal (310);
a transmitter arranged to send, in response thereto, a proactive command to the communication terminal (310);
a processor operably coupled to the receiver and transmitter;
wherein the receiver is arranged to receive, in response to the proactive command, a notification of a temporary proactive command failure between the UICC and the communication terminal (310), wherein the processor is arranged to:
determine that the notification comprises an expected duration to recover from the temporary proactive command failure; and
implement a strategy to handle the temporary proactive command failure of the communication in dependence on the notification, wherein the strategy comprises one of:
wait a period of time that exceeds the expected duration before re-sending the proactive command;
wait an apriori period of time agreed between the UICC (320) and the communication terminal (310) before re-sending the proactive command;
re-send the proactive command in response to a subsequent event initiated by the communication terminal (310) and informed to the UICC (320) in the notification;
terminate the communication between the UICC (320) and the communication terminal (310).

9. The UICC (320) of Claim 8 wherein the notification of the temporary proactive command failure comprises one or more of the following:
an expected duration for the communication terminal (310) to recover to a state where it is able to process the proactive command that failed with the temporary proactive command failure;
information identifying a subsequent event where the event indicates that the communication terminal (310) is in a state able to receive the proactive command;
a status of the communication terminal;
a state of a current UICC command being performed by the communication terminal (310).

10. The UICC (320) of Claim 8 or Claim 9 wherein the processor is arranged to re-send the proactive command a limited number of attempts.

11. The UICC (320) of Claim 10 wherein the limited number of attempts is configurable.

12. The UICC (320) of any of preceding Claims 8 to 11 wherein the processor is arranged to decide not to re-send the proactive command until the UICC (320) knows a status of the communication terminal (310).

13. The UICC (320) of any preceding Claims 8 to 12 wherein the processor is arranged to:
determine that the expected duration to recover from the temporary proactive command failure in the notification is unacceptable to the UICC (320); and
decide not to wait before the proactive command is re-sent.

14. A communication terminal (310) for handling a temporary proactive command failure between the communication terminal and an universal integrated circuit card, UICC (320), the communication terminal (310) comprising:
a transmitter arranged to send a communication to the UICC (320);
a receiver arranged to receive, in response thereto, a proactive command from the UICC (320);
a processor operably coupled to the receiver and transmitter and arranged to:
process the proactive command, and
determine that a temporary proactive command failure exists between the UICC (320) and the communication terminal (310) and, in dependence thereon the transmitter sends a notification of the temporary proactive command failure, wherein the notification comprises an expected duration to recover from the temporary proactive command failure.

15. The communication terminal of Claim 14 wherein the notification of the temporary proactive command failure comprises one or more of the following:
an expected duration for the communication terminal (310) to recover to a state where it is able to process the proactive command that failed with the temporary proactive command failure;
information identifying a subsequent event where the event indicates that the communication terminal (310) is in a state able to receive the proactive command;
a status of the communication terminal;
a state of a current UICC command being performed by the communication terminal (310).
